# EUROPEAN PATENT APPLICATION

(11) **EP 4 187 476 A1**
(43) Date of publication of application: **31.05.2023**
(21) Application number: 22208505.2
(22) Date of filing: 21.11.2022
(51) Int. Cl.: G06Q 40/06

(54) **METHOD AND APPARATUS OF TREATING ASSET, ELECTRONIC DEVICE AND STORAGE MEDIUM**

(30) Priority: 24.11.2021 CN 202111410071
(71) Applicant: Beijing Baidu Netcom Science Technology Co., Ltd., Beijing 100085 (CN)
(72) Inventor: Jin, Shenglong, Beijing, 100085 (CN); An, Yunjing, Beijing, 100085 (CN); Wei, Chengdong, Beijing, 100085 (CN); Chang, Lin, Beijing, 100085 (CN)
(74) Representative: Hoffmann Eitle

(57) **Abstract**

The present disclosure provides a method of treating an asset, and relates to a field of computer technology, in particular to artificial intelligent financial technology. The specific implementation solution is: acquiring a target rate of return; adjusting a value of at least one asset in a first asset set so that a predicted rate of return for the adjusted first asset set is greater than or equal to the target rate of return, wherein the first asset set includes M assets, and M is an integer greater than or equal to 1; and obtaining a second asset set according to the adjusted first asset set, so that a relationship between a yield increment and a risk increment meets a preset relationship, wherein the yield increment is an yield increment of the second asset set relative to the adjusted first asset set, and the risk increment is an risk increment of the second asset set relative to the adjusted first asset set. The present disclosure further provides an apparatus of treating an asset, an electronic device, and a storage medium.

## Description

### TECHNICAL FIELD

The present disclosure relates to a field of computer technology, in particular to artificial intelligent financial technology. More specifically, the present disclosure provides a method and an apparatus of treating an asset, an electronic device and a storage medium.

### BACKGROUND

In the related art, a user may be recommended with a plurality of asset categories according to the user's expected yield and risk tolerance. Then, according to an asset category selected by the user from the plurality of recommended assets, a preset asset set corresponding to the asset category is acquired, so as to obtain an asset portfolio for the user.

### SUMMARY

The present disclosure provides a method and an apparatus of treating an asset, an electronic device and a storage medium.

According to a first aspect, there is provided a method of treating an asset, including: acquiring a target rate of return; adjusting a value of at least one asset in a first asset set so that a predicted rate of return for the adjusted first asset set is greater than or equal to the target rate of return, wherein the first asset set includes M assets, and M is an integer greater than or equal to 1; and obtaining a second asset set according to the adjusted first asset set, so that a relationship between a yield increment and a risk increment meets a preset relationship, wherein the yield increment is a yield increment of the second asset set relative to the adjusted first asset set, and the risk increment is a risk increment of the second asset set relative to the adjusted first asset set.

According to a second aspect, there is provided an apparatus of treating an asset, including: a first acquisition module configured to acquire a target rate of return; a first adjustment module configured to adjust a value of at least one asset in a first asset set so that a predicted rate of return for the adjusted first asset set is greater than or equal to the target rate of return, wherein the first asset set includes M assets, and M is an integer greater than or equal to 1; and a first obtaining module configured to obtain a second asset set according to the adjusted first asset set, so that a relationship between a yield increment and a risk increment meets a preset relationship, wherein the yield increment is a yield increment of the second asset set relative to the adjusted first asset set, and the risk increment is a risk increment of the second asset set relative to the adjusted first asset set.

According to a third aspect, there is provided an electronic device, including: at least one processor; and a memory communicatively connected to the at least one processor, wherein the memory stores instructions executable by the at least one processor, and the instructions, when executed by the at least one processor, cause the at least one processor to implement the method provided in the present disclosure.

According to a fourth aspect, there is provided a non-transitory computer readable storage medium having computer instructions therein, wherein the computer instructions are configured to cause a computer to implement the method provided in the present disclosure.

According to a fifth aspect, there is provided a computer program product containing a computer program, wherein the computer program, when executed by a processor, causes the processor to implement the method provided in the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 shows a schematic diagram of an exemplary system architecture to which a method and an apparatus of treating an asset may be applied according to an embodiment of the present disclosure;
FIG. 2 shows a flowchart of a method of treating an asset according to an embodiment of the present disclosure;
FIG. 3 shows a flowchart of a method of treating an asset according to another embodiment of the present disclosure;
FIG. 4 shows a schematic diagram of a method of treating an asset according to an embodiment of the present disclosure;
FIG. 5 shows a block diagram of an apparatus of treating an asset according to an embodiment of the present disclosure; and
FIG. 6 shows a block diagram of an electronic device to which a method of treating an asset may be applied according to an embodiment of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

A user may select an asset according to real-time transaction information and hot news to obtain an asset portfolio. However, due to insufficient investment capacity, the user may not obtain a satisfactory yield.

A method for asset allocation may be implemented to allocate asset according to common indexes, such as passive asset allocation based on the Shanghai Stock Exchange 50 Index. The method does not take into account a macro environment of a market and an industry actuality, and may not enable a user to obtain a satisfactory yield. In these passive asset allocation solutions, a proportion of an asset in the asset portfolio may not be adjusted. Alternatively, the assets in the asset portfolio may only be adjusted according to a target rate of return or a target risk value, which may not further expand the user's yield.

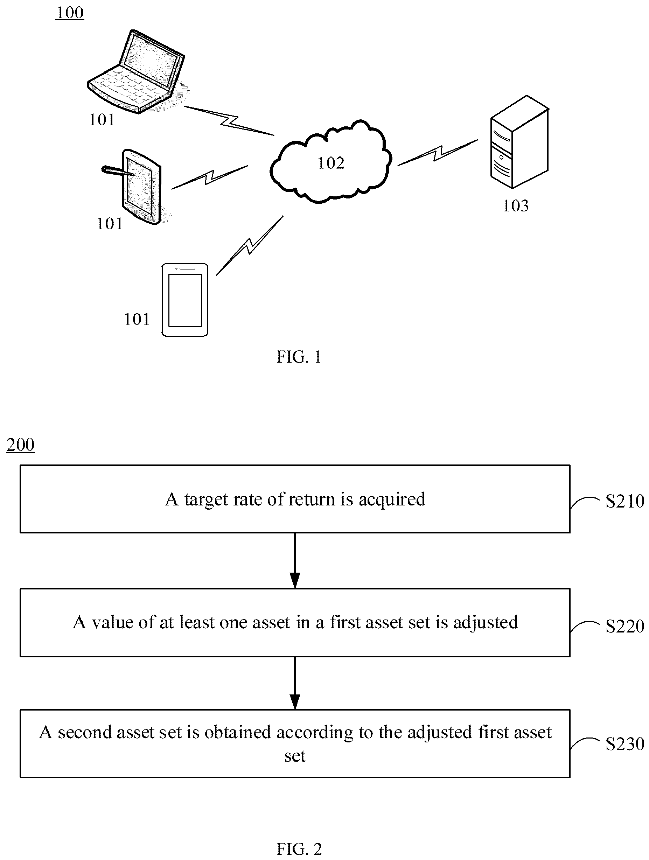

FIG. 1 shows a schematic diagram of an exemplary system architecture to which a method and an apparatus of treating an asset may be applied according to an embodiment of the present disclosure. It should be noted that FIG. 1 is only an example of the system architecture to which embodiments of the present disclosure may be applied to help those skilled in the art understand the technical content of the present disclosure, and does not mean that embodiments of the present disclosure may not be used for other devices, systems, environments or scenarios.

As shown in FIG. 1, a system architecture 100 according to the embodiment may include a plurality of terminal devices 101, a network 102, and a server 103. The network 102 is a medium for providing a communication link between the terminal device 101 and the server 103. The network 102 may include various connection types, such as wired and/or wireless communication links and the like.

The user may use the terminal device 101 to interact with the server 103 via the network 102 to receive or send a message or the like. The terminal device 101 may be various electronic devices, including but not limited to a smart phone, a tablet, a laptop, and the like.

The method of treating an asset provided in embodiments of the present disclosure may generally be performed by the server 103. Accordingly, the apparatus of treating an asset provided in embodiments of the present disclosure may generally be provided in the server 103. The method of treating an asset provided in embodiments of the present disclosure may also be performed by a server or a server cluster that is different from the server 103 and may communicate with the terminal device 101 and/or the server 103. Accordingly, the apparatus of treating an asset provided in embodiments of the present disclosure may also be provided in a server or a server cluster different from the server 103 and may communicate with the terminal device 101 and/or the server 103.

FIG. 2 shows a flowchart of a method of treating an asset according to an embodiment of the present disclosure.

As shown in FIG. 2, a method 200 may include operation S210 to operation S230.

In operation S210, a target rate of return is acquired.

In embodiments of the present disclosure, the target rate of return and a target risk value may be acquired.

For example, the target rate of return may be an expected rate of return input by a user. For another example, the target risk value may be a user-input maximum tolerable loss value. In an example, the target rate of return is 10% and the target risk value is 5%.

In operation S220, a value of at least one asset in a first asset set is adjusted.

In embodiments of the present disclosure, the first asset set may be acquired according to at least one third asset set, which will be described in detail below.

In embodiments of the present disclosure, in response to at least one asset category being selected, each selected asset category may be determined as a target asset category to obtain at least one target asset category.

For example, asset categories may include an equity asset, a fixed income asset, a bulk commodity asset and a monetary asset. In an example, the equity asset may be a stock.

For example, an asset category may be recommended for a user based on the acquired target rate of return. In an example, the target rate of return is 10%, and all the above-mentioned asset categories may be recommended for the user. In another example, the target rate of return is 30%, and the equity asset, the fixed income asset, the bulk commodity asset may be recommended for the user, but not the monetary asset.

For example, each asset category corresponds to an evaluation value obtained according to macroeconomic data and/or industry economic data related to each asset category. When recommending an asset category, the evaluation value of the asset category is displayed simultaneously to facilitate the user to select an asset category.

In an example, the evaluation value may be obtained from an odds signal value, a win rate signal value, a trend signal value, and a congestion signal value. For example, for the equity asset, the odds signal value may be a difference value between an average dividend yield and a national debt yield. When selecting an asset, the user may refer to the macro environment and the industry actuality to obtain a more reliable selection result, so as to focus on a high-quality industry.

Those skilled in the art may understand that according to macroeconomic data and/or industry economic data related to each asset category, the odds signal value, the win rate signal value, the trend signal value and the congestion signal value of an asset category may be obtained by any means to obtain the evaluation value of the asset category, which is not limited in the present disclosure.

For example, in response to the fixed income asset and the equity asset being selected, two target asset categories may be obtained.

In embodiments of the present disclosure, for at least one target asset category, a third asset set corresponding to each target asset category may be acquired to obtain at least one third asset set.

For example, after obtaining the third asset set, one of a mean variance model, a BL model, a risk parity model and a risk budget model may be used to acquire the respective values of the equity asset and the fixed income asset in the first asset set. In an example, according to the risk parity model, an acquired value of the equity asset in the first asset set is 60%, and an acquired value of the fixed income asset in the first asset set is 40%.

For example, the third asset set may include a plurality of assets.

For example, the third asset set may be obtained according to common indexes. In an example, the third asset set may be obtained from common indexes such as Shanghai Stock Exchange 50 Index and Shenzhen Composite Index. For example, a plurality of stocks corresponding to the Shanghai Stock Exchange 50 Index are used as assets in the third asset set to obtain the third asset set.

In embodiments of the present disclosure, the first asset set may be acquired according to at least one third asset set.

For example, in response to at least one asset in the third asset set conforming to a first filtering strategy, the first asset set may be acquired according to the at least one asset conforming to the first filtering strategy.

In an example, the first filtering strategy may be input by a user. The first filtering strategy may include at least one first filtering rule. The first filtering rule may include a relationship between an attribute of an asset and an attribute value input by the user for the attribute. For example, the asset may be a stock, and an attribute of the stock may be a dividend yield.

In an example, the first filtering strategy input by the user may include two first filtering rules. One of the first filtering rules may be: the dividend yield of the stock is greater than 1%. The dividend yield of the stock may be an attribute of the asset, and 1% may be an attribute value input by the user for the attribute. Another first filtering rule may be: a static P/E ratio of the stock is less than 10 times. The user may select the asset by himself.

For example, in response to at least one asset in the third asset set conforming to a preset second filtering strategy, the first asset set is acquired according to the at least one asset conforming to the preset second filtering strategy.

In an example, the preset second filtering strategy includes at least one second filtering rule, and the second filtering rule includes a relationship between an attribute of an asset and a preset attribute value of the attribute. The user may be assisted to select an asset according to a preset strategy. For example, all assets conforming to the strategy may be selected.

In embodiments of the present disclosure, a predicted rate of return for the adjusted first asset set is greater than or equal to the target rate of return.

For example, a value of each asset in the first asset set may be equal. The value of the asset may be a proportion of the asset.

Those skilled in the art may understand that a predicted rate of return of an asset may be determined in any way, which is not limited in the present disclosure.

For example, the value of each asset in the adjusted first asset set is different. In an example, a value of a stock in the adjusted first asset set is 60%, and a value of a bond in the adjusted first asset set is 40%. A predicted rate of return of a stock is 14%, and a predicted rate of return of a bond is 4%. Then, a predicted rate of return for the adjusted first asset set is 10%.

For example, the first asset set includes M assets, and M is an integer greater than or equal to 1. In an example, M assets may include different categories of assets.

In operation S230, a second asset set is obtained according to the adjusted first asset set.

For example, a predicted rate of return for the adjusted first asset set may be greater than or equal to the target rate of return. Next, the adjusted first asset set may be optimized to obtain the second asset set.

For example, a relationship between a yield increment and a risk increment meets a preset relationship. The yield increment is a yield increment of the second asset set relative to the adjusted first asset set, and the risk increment is a risk increment of the second asset set relative to the adjusted first asset set. In an example, the yield increment may be a percentage. The risk increment may also be a percentage. In an example, a preset threshold is 4. In an example, an increment may be an amount of change.

For example, the preset relationship is that a ratio of the yield increment to the risk increment is greater than or equal to the preset threshold.

In an example, taking the preset threshold being 4 as an example, if the yield increment is 1% and the risk increment is 0.25%, the second asset set may be obtained according to the adjusted first asset set. For example, the value of the stock in the first asset set is increased and the value of the bond in the first asset set is decreased. For example, the predicted rate of return for the adjusted first asset set is 10%, and the risk value of the adjusted first asset set is 4%. The predicted rate of return of the second asset set is 11%, and the risk value of the second asset set is 4.25%.

In an example, taking the preset threshold being 4 as an example, if the yield increment is 4% and the risk increment is 0.8%, the second asset set may be obtained according to the adjusted first asset set. For example, the predicted rate of return for the adjusted first asset set is 10%, and the risk value of the adjusted first asset set is 4%. The predicted rate of return of the second asset set is 14%, and the risk value of the second asset set is 4.8%.

Those skilled in the art may understand that the second asset set may be obtained according to the adjusted first asset set in a variety of ways, which is not limited in the present disclosure, as long as a relationship between the yield increment and the risk increment meets the preset relationship.

With embodiments of the present disclosure, the predicted rate of return may be predicted according to any indicator, such as the dividend yield or the static P/E ratio described above. Therefore, a calculation indicator that asset optimization depends on is expanded, and the asset value may be adjusted from a plurality of indicator dimensions, which improves a reliability.

In some embodiments, the third asset set may be obtained by: acquiring K fourth asset sets. Each fourth asset set includes at least one asset subset. Each asset subset corresponds to an asset category. All assets in the K fourth asset sets correspond to J asset categories. K is an integer greater than or equal to 1, and J is an integer greater than or equal to 1. For the J asset categories, all asset subsets corresponding to each asset category are combined to obtain J third asset sets.

In an example, each fourth asset set may correspond to a securities investment fund. All assets in a securities investment fund may correspond to the equity asset (such as a stock) and the fixed income asset (such as a bond). For example, K funds may be acquired according to a size of a fund, an investment ability of a fund manager, a performance of a fund, a size of a fund management organization and other conditions. Then, according to a composition of each fund, a fourth asset set is obtained. Then, K fourth asset sets may be acquired according to the K funds.

In an example, taking K = 3 as an example, the fourth asset set A includes an asset subset As and an asset subset Ab. The asset subset As includes a stock As1 and a stock As2, and the asset subset Ab includes a bond Ab1. The fourth asset set B includes an asset subset Bs and an asset subset Bb. The asset subset Bs includes a stock Bs1, and the asset subset Bb includes a bond Bb1 and a bond Bb2. The fourth asset set C includes an asset subset Cs and an asset subset Cb. The asset subset Cs includes a stock Cs1, and the asset subset Cb includes a bond Cb1. The asset subset As, asset subset Bs, and asset subset Cs corresponding to the equity assets are combined to obtain a third asset set S. The third asset set S includes the stock As1, the stock As2, the stock Bs1 and the stock Cs1. In a similar way, another third asset set B may be obtained.

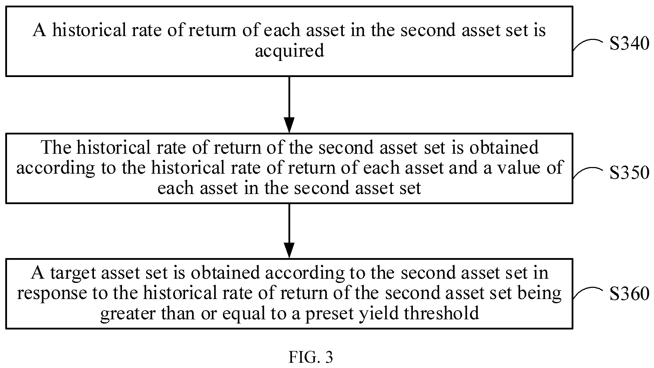

FIG. 3 shows a flowchart of a method of treating an asset according to another embodiment of the present disclosure.

As shown in FIG. 3, the method may be performed, for example, after operation S230 as shown in FIG. 2, which will be described in detail below with reference to operation S340 to operation S360.

In operation S340, a historical rate of return of each asset in the second asset set is acquired.

For example, the historical rate of return is a rate of return of each asset in a preset period of time.

For example, the preset period of time may be one year. The historical rate of return of an asset may be a rate of return of the asset in the past year. In an example, the price of the stock As1 at the beginning of the year is 100 yuan, and the price of the stock As1 at the end of the year is 125 yuan. According to the price of the stock As1 at the beginning of the year and the price at the end of the year, the historical rate of return of the stock As 1 is 25%.

In operation S350, the historical rate of return of the second asset set is obtained according to the historical rate of return of each asset and a value of each asset in the second asset set.

For example, in a second asset set, a historical rate of return of the stock As1 is 25%, a historical rate of return of the bond Ab1 is 2%, a value of the stock As1 is 60%, and a value of the bond Ab1 is 40%. Then, a historical rate of return of the second asset set may be 15.8%.

In operation S360, a target asset set is obtained according to the second asset set in response to the historical rate of return of the second asset set being greater than or equal to a preset yield threshold.

For example, the preset yield threshold may be the target rate of return. In an example, taking the target rate of return being 10% as an example, the historical return of the second asset set described above is 15.8%, and then the second asset set may be determined as the target asset set.

The rate of return of some assets in a predetermined period of time is low, and a predicted rate of return in a future period of time may be significantly higher than the rate of return in the predetermined period of time. For example, in a predetermined period of time, an enterprise corresponding to a certain stock has made a large number of investment behaviors, resulting in a decline in a rate of return in the predetermined period of time. However, in the future, for example, after the investment behaviors may generate returns, the predicted rate of return of the enterprise may increase significantly. Calculating the historical rate of return of the second asset set may further reduce a risk.

In some embodiments, a value of at least one asset in the target asset set may be adjusted according to a preset period.

For example, a value of at least one asset in the target asset set may be adjusted every month so that the predicted rate of return of the target asset set is greater than or equal to the target rate of return.

In some embodiments, a value of at least one asset in the target asset set may be adjusted according to a preset date.

For example, the assets in the target asset set may be cleared on a first preset date and the target asset set may be rebuilt on a second preset date, so as to reduce a risk. A period of time between the first preset date and the second preset date may be a period of time in which asset transactions are not allowed, such as official holiday.

In some embodiments, a value of at least one asset in the target asset set is adjusted in response to a current yield deviation of the target asset set being greater than or equal to a preset deviation threshold.

For example, the current yield deviation is obtained according to a current rate of return of the target asset set and the target rate of return.

For example, at a certain point of time, the current rate of return of the target asset set is 9% and the target rate of return is 14%. The current yield deviation may be a difference (5%) between the current rate of return and the target rate of return. Taking the preset deviation threshold as 4% as an example, the value of at least one asset in the target asset set may be adjusted so that the yield deviation is less than or equal to the preset deviation threshold.

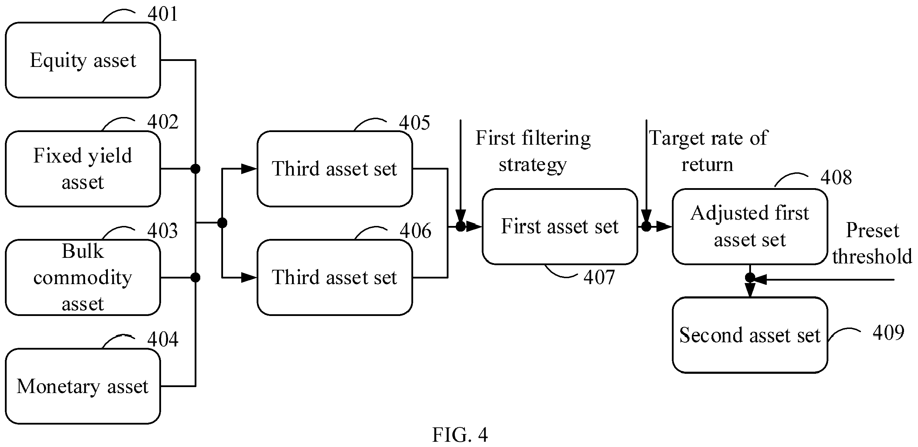

FIG. 4 shows a schematic diagram of a method of treating an asset according to an embodiment of the present disclosure.

As shown in FIG. 4, taking four asset categories as an example, the method of treating an asset in the present disclosure will be described in detail.

The four asset categories are an equity asset 401, a fixed income asset 402, a bulk commodity asset 403 and a monetary asset 404. In response to the equity asset 401 and the fixed income asset 402 being selected, the equity asset 401 and the fixed income asset 402 may be determined as target asset categories. Next, a third asset set 405 corresponding to the equity asset 401 may be acquired, and a third asset set 406 corresponding to the fixed income asset may be acquired.

It should be noted that each asset category may correspond to an evaluation value. For example, an evaluation value of the equity asset 401 may be a difference between an average dividend yield and a national debt rate of return.

A first asset set 407 may be acquired according to at least one asset conforming to the first filtering strategy input by the user in the third asset set 405 and the third asset set 406. A value of at least one asset in the first asset set 407 is adjusted so that a predicted rate of return for the adjusted first asset set 408 is greater than or equal to the target rate of return set by the user. The adjusted first asset set 408 may be optimized to obtain the second asset set 409, so that a ratio of a yield increment of the second asset set 409 relative to the adjusted first asset set 408 to a risk increment of the second asset set 409 relative to the adjusted first asset set 408 is greater than or equal to the preset threshold.

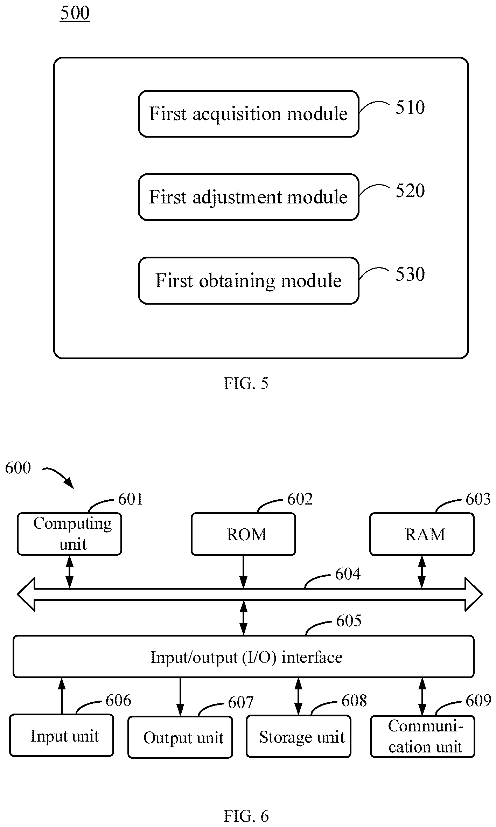

FIG. 5 shows a block diagram of an apparatus of treating an asset according to an embodiment of the present disclosure.

As shown in FIG. 5, an apparatus 500 may include a first acquisition module 510, a first adjustment module 520, and a first obtaining module 530.

The first acquisition module 510 is used to acquire a target rate of return.

The first adjustment module 520 is used to adjust a value of at least one asset in a first asset set so that a predicted rate of return for the adjusted first asset set is greater than or equal to the target rate of return. The above-mentioned first asset set includes M assets, and M is an integer greater than or equal to 1.

The first obtaining module 530 is used to obtain the above-mentioned second asset set according to the above-mentioned adjusted first asset set, so that a relationship between a yield increment and a risk increment meets a preset relationship, wherein, the above-mentioned yield increment is a yield increment of the above-mentioned second asset set relative to the above-mentioned adjusted first asset set, and the above-mentioned risk increment is a risk increment of the above-mentioned second asset set relative to the above-mentioned adjusted first asset set.

In some embodiments, the above-mentioned preset relationship is that a ratio of the above-mentioned yield increment to the above-mentioned risk increment is greater than or equal to a preset threshold.

In some embodiments, the apparatus 500 further includes: a second obtaining module used to determine, in response to at least one asset category being selected, each selected asset category as a target asset category to obtain at least one target asset category, wherein each asset category corresponds to an evaluation value obtained according to macroeconomic data and/or industry economic data related to each asset category; a second acquisition module used to acquire, for the at least one target asset category, a third asset set corresponding to each target asset category to obtain at least one third asset set, wherein the above-mentioned third asset set includes a plurality of assets; and a third acquisition module used to acquire the first asset set according to the above-mentioned at least one third asset set.

In some embodiments, the above-mentioned third asset set is obtained by performing relevant operations through: a fourth acquisition module used to acquire K fourth asset sets, wherein each fourth asset set includes at least one asset subset, each asset subset corresponds to an asset category, all assets in the above-mentioned K fourth asset set correspond to J asset categories, K is an integer greater than or equal to 1, and J is an integer greater than or equal to 1; a third obtaining module used to combine, for the above-mentioned J asset categories, all asset subsets corresponding to the above-mentioned each asset category to obtain J third asset sets.

In some embodiments, the above-mentioned third acquisition module includes at least one of: a first acquisition sub-module used to acquire, in response to at least one asset in the above-mentioned third asset set conforming to a first filtering strategy, the above-mentioned first asset set according to the at least one asset conforming to the first filtering strategy, wherein the first filtering strategy is input by a user, the above-mentioned first filtering strategy includes at least one first filtering rule, and the above-mentioned first filtering rule includes a relationship between an attribute of an asset and an attribute value input by the user for the attribute; a second acquisition sub-module used to acquire, in response to at least one asset in the above-mentioned third asset set conforming to a preset second filtering strategy, the above-mentioned first asset set according to the at least one asset conforming to the preset second filtering strategy, wherein the above-mentioned second filtering strategy includes at least one second filtering rule, and the above-mentioned second filtering rule includes a relationship between an attribute of an asset and a preset attribute value of the attribute.

In some embodiments, the apparatus 500 further includes: a fourth acquisition module used to acquire a historical rate of return of each asset in the above-mentioned second asset set, wherein the above-mentioned historical rate of return is a rate of return of each asset in a preset period of time; a fourth obtaining module used to obtain a historical rate of return of the above-mentioned second asset set according to the above-mentioned historical rate of return of each asset and a value of each asset in the above-mentioned second asset set; and a fifth obtaining module used to obtain a target asset set according to the above-mentioned second asset set in response to the historical yield of the above-mentioned second asset set being greater than a preset yield threshold.

In some embodiments, the apparatus 500 further includes at least one of: a second adjustment module used to adjust a value of at least one asset in the above-mentioned target asset set according to a preset period; a third adjustment module used to adjust a value of at least one asset in the above-mentioned target asset set according to a preset date; and a fourth adjustment module used to adjust a value of at least one asset in the above-mentioned target asset set in response to a current yield deviation of the above-mentioned target asset set being greater than a preset deviation threshold, wherein the above-mentioned current yield deviation is obtained according to a current rate of return of the above-mentioned target asset set and the above-mentioned target rate of return.

In the technical solution of the present disclosure, an acquisition, a storage, a use, a processing, a transmission, a provision, a disclosure, and an application of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

According to embodiments of the present disclosure, the present disclosure further provides an electronic device, a readable storage medium and a computer program product.

FIG. 6 shows a schematic block diagram of an exemplary electronic device 900 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the device 600 may also be stored. The computing unit 601, the ROM 602 and the RAM 603 are connected to each other through a bus 604. An input/output (I/O) interface 605 is also connected to the bus 604.

A plurality of components in the device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processor (DSP), and any suitable processor, controller, microcontroller, etc. The computing unit 601 executes various methods and processes described above, such as the method of treating an asset. For example, in some embodiments, the method of treating an asset may be implemented as a computer software program which is tangibly embodied in a machine-readable medium, such as the storage unit 608. In some embodiments, the computer program may be partially or entirely loaded and/or installed in the device 600 via the ROM 602 and/or the communication unit 609. The computer program, when loaded in the RAM 603 and executed by the computing unit 601, may execute one or more steps in the method of treating an asset described above. Alternatively, in other embodiments, the computing unit 601 may be used to perform the method of treating an asset by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server for distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of treating an asset, comprising:
acquiring (S210) a target rate of return;
adjusting (S220) a value of at least one asset in a first asset set (407) so that a predicted rate of return for the adjusted first asset set (408) is greater than or equal to the target rate of return, wherein the first asset set (407) comprises M assets, and M is an integer greater than or equal to 1; and
obtaining (S230) a second asset set (409) according to the adjusted first asset set (408), so that a relationship between a yield increment and a risk increment meets a preset relationship, wherein the yield increment is a yield increment of the second asset set (409) relative to the adjusted first asset set (408), and the risk increment is a risk increment of the second asset set (409) relative to the adjusted first asset set (408).

2. The method according to claim 1, wherein the preset relationship is that a ratio of the yield increment to the risk increment is greater than or equal to a preset threshold.

3. The method according to claim 1, further comprising:
determining, in response to at least one asset category (401, 402) being selected, each selected asset category (401, 402) as a target asset category to obtain at least one target asset category, wherein each asset category (401, 402, 403, 404) corresponds to an evaluation value obtained according to macroeconomic data and/or industry economic data related to each asset category (401, 402, 403, 404);
acquiring, for the at least one target asset category, a third asset set (405, 406) corresponding to each target asset category to obtain at least one third asset set (405, 406), wherein the third asset set (405, 406) comprises a plurality of assets; and
acquiring the first asset set (407) according to the at least one third asset set (405, 406).

4. The method according to claim 3, wherein the third asset set is obtained by:
acquiring K fourth asset sets, wherein each fourth asset set comprises at least one asset subset, each asset subset corresponds to an asset category, all assets in the K fourth asset sets correspond to J asset categories, where K is an integer greater than or equal to 1, and J is an integer greater than or equal to 1; and
for the J asset categories, combining all asset subsets corresponding to each asset category to obtain J third asset sets.

5. The method according to claim 3, wherein the acquiring the first asset set (407) according to the at least one third asset set (405, 406) comprises at least one of:
acquiring, in response to at least one asset in the third asset set (405, 406) conforming to a first filtering strategy, the first asset set (407) according to the at least one asset conforming to the first filtering strategy, wherein the first filtering strategy is input by a user, the first filtering strategy comprises at least one first filtering rule, and the first filtering rule comprises a relationship between an attribute of an asset and an attribute value input by the user for the attribute; and
acquiring, in response to at least one asset in the third asset set (405, 406) conforming to a preset second filtering strategy, the first asset set (407) according to the at least one asset conforming to the preset second filtering strategy, wherein the second filtering strategy comprises at least one second filtering rule, and the second filtering rule comprises a relationship between an attribute of an asset and a preset attribute value of the attribute.

6. The method according to claim 1, further comprising:
acquiring a historical rate of return of each asset in the second asset set (409), wherein the historical rate of return is a rate of return of each asset in a preset period of time;
obtaining a historical rate of return of the second asset set (409) according to the historical rate of return of each asset and a value of each asset in the second asset set (409); and
obtaining a target asset set according to the second asset set (409) in response to the historical yield of the second asset set (409) being greater than or equal to a preset yield threshold.

7. The method according to claim 6, further comprising at least one of:
adjusting a value of at least one asset in the target asset set according to a preset period;
adjusting a value of at least one asset in the target asset set according to a preset date; and
adjusting a value of at least one asset in the target asset set in response to a current yield deviation of the target asset set being greater than or equal to a preset deviation threshold, wherein the current yield deviation is obtained according to a current rate of return of the target asset set and the target rate of return.

8. An apparatus of treating an asset, comprising:
a first acquisition module (510) configured to acquire a target rate of return;
a first adjustment module (520) configured to adjust a value of at least one asset in a first asset set so that a predicted rate of return for the adjusted first asset set is greater than or equal to the target rate of return, wherein the first asset set comprises M assets, and M is an integer greater than or equal to 1; and
a first obtaining module (530) configured to obtain a second asset set according to the adjusted first asset set, so that a relationship between a yield increment and a risk increment meets a preset relationship, wherein the yield increment is a yield increment of the second asset set relative to the adjusted first asset set, and the risk increment is a risk increment of the second asset set relative to the adjusted first asset set.

9. The apparatus according to claim 8, wherein the preset relationship is that a ratio of the yield increment to the risk increment is greater than or equal to a preset threshold.

10. The apparatus according to claim 8, further comprising:
a second obtaining module configured to determine, in response to at least one asset category being selected, each selected asset category as a target asset category to obtain at least one target asset category, wherein each asset category corresponds to an evaluation value obtained according to macroeconomic data and/or industry economic data related to each asset category;
a second acquisition module configured to acquire, for the at least one target asset category, a third asset set corresponding to each target asset category to obtain at least one third asset set, wherein the third asset set comprises a plurality of assets; and
a third acquisition module configured to acquire the first asset set according to the at least one third asset set,
preferably, wherein the third asset set is obtained by performing relevant operations through:
a fourth acquisition module configured to acquire K fourth asset sets, wherein each fourth asset set comprises at least one asset subset, each asset subset corresponds to an asset category, all assets in the K fourth asset sets correspond to J asset categories, where K is an integer greater than or equal to 1, and J is an integer greater than or equal to 1; and
a third obtaining module configured to combine, for the J asset categories, all asset subsets corresponding to each asset category to obtain J third asset sets.

11. The apparatus according to claim 10, the third acquisition module comprises at least one of:
a first acquisition sub-module configured to acquire, in response to at least one asset in the third asset set conforming to a first filtering strategy, the first asset set according to the at least one asset conforming to the first filtering strategy, wherein the first filtering strategy is input by a user, the first filtering strategy comprises at least one first filtering rule, and the first filtering rule comprises a relationship between an attribute of an asset and an attribute value input by the user for the attribute; and
a second acquisition sub-module configured to acquire, in response to at least one asset in the third asset set conforming to a preset second filtering strategy, the first asset set according to the at least one asset conforming to the preset second filtering strategy, wherein the second filtering strategy comprises at least one second filtering rule, and the second filtering rule comprises a relationship between an attribute of an asset and a preset attribute value of the attribute.

12. The apparatus according to claim 8, further comprising:
a fourth acquisition module configured to acquire a historical rate of return of each asset in the second asset set, wherein the historical rate of return is a rate of return of each asset in a preset period of time;
a fourth obtaining module configured to obtain a historical rate of return of the second asset set according to the historical rate of return of each asset and a value of each asset in the second asset set; and
a fifth obtaining module configured to obtain a target asset set according to the second asset set in response to the historical yield of the second asset set being greater than or equal to a preset yield threshold,
preferably, the apparatus further comprises at least one of:
a second adjustment module configured to adjust a value of at least one asset in the target asset set according to a preset period;
a third adjustment module configured to adjust a value of at least one asset in the target asset set according to a preset date; and
a fourth adjustment module configured to adjust a value of at least one asset in the target asset set in response to a current yield deviation of the target asset set being greater than a preset deviation threshold, wherein the current yield deviation is obtained according to a current rate of return of the target asset set and the target rate of return.

13. An electronic device (600), comprising:
at least one processor; and
a memory communicatively connected to the at least one processor,
wherein the memory stores instructions executable by the at least one processor, and the instructions, when executed by the at least one processor, cause the at least one processor to implement the method according to any one of claims 1 to 7.

14. A non-transitory computer readable storage medium having computer instructions therein, wherein the computer instructions are configured to cause a computer to implement the method according to any one of claims 1 to 7.

15. A computer program product containing a computer program, wherein the computer program, when executed by a processor, causes the processor to implement the method according to any one of claims 1 to 7.
